# FASCICULE DE BREVET EUROPEEN

(11) **EP 1 197 358 B1**
(45) Date de publication et mention de la délivrance du brevet: **17.12.2003**
(21) Numéro de dépôt: 01402520.9
(22) Date de dépôt: 28.09.2001
(51) Int. Cl.: B60G 7/00, F16F 1/38

(54) **Procédé de fabrication d'un bras pour une suspension multi-bras**
Herstellungsverfahren eines Lenkers einer Multilenkeraufhängung
Method for fabricating an arm for a multi-link suspension

(30) Priorité: 11.10.2000 FR 0013011
(43) Date de publication de la demande: 17.04.2002
(73) Titulaire: VALLOUREC COMPOSANTS AUTOMOBILES VITRY, 51300 Vitry le Francois (FR)
(72) Inventeur: Gerbault, Didier, 51000 Chalons en Champagne (FR); Baroni, Michel, 51300 Marolles (FR); Deslande, Raymond, 51300 Loisy sur Marne (FR); Panozzo, Régis, 51300 Vitry le François (FR)
(74) Mandataire: Plaçais, Jean-Yves

(56) Documents cités:
- US-A- 3 880 444
- US-A- 5 305 661
- US-A- 5 431 540
- PATENT ABSTRACTS OF JAPAN vol. 1995, no. 04, 31 mai 1995 (1995-05-31) & JP 07 017229 A (SUZUKI MOTOR CORP), 20 janvier 1995 (1995-01-20)

## Description

L'invention concerne le domaine des suspensions automobiles.

Des essieux dits "multi-liens" sont équipés d'une pluralité de bras qui sont articulés pour chaque côté de roue, d'une part, sur un élément du véhicule tel que le moyeu et, d'autre part, sur un autre élément du véhicule tel que la caisse ou le berceau du véhicule. Les dispositions respectives des bras forment un agencement qui définit un angle du moyeu par rapport à la caisse, dont va dépendre notamment l'angle de pince de la roue qui sera montée sur le moyeu.

Compte tenu de la symétrie d'un tel essieu par rapport à l'axe longitudinal du véhicule, on désignera ci-après par "demi-essieu" la partie de l'essieu relative à une même roue, gauche ou droite.

On comprend bien qu'une précision sur la fabrication des bras du demi-essieu soit recherchée.

Habituellement, de tels bras comportent au moins deux ouvertures qui logent de façon serrée deux blocs d'articulation élastique. Ces blocs sont formés chacun d'une bague interne et d'une bague externe, avec un lien élastique reliant les deux bagues. L'axe de la bague interne définit sensiblement un axe général d'articulation, tandis que l'axe de la bague externe définit sensiblement un axe général de bloc. En particulier, la distance entre les axes des bagues internes de deux blocs d'un bras, correspondant à la distance entre les deux axes d'articulation du bras (et qui définit la longueur "utile" de ce bras), devrait respecter des tolérances étroites.

Alors que l'usinage ou le formage des ouvertures dans les ébauches de bras atteint des précisions qui pourraient largement respecter ces tolérances, les techniques actuelles de fabrication des blocs d'articulation élastique ne permettent pas d'obtenir d'aussi bons résultats. En particulier, une excentration résiduelle entre la bague interne et la bague externe d'un bloc est souvent notable sur les bras fabriqués. Ces excentrations résiduelles se traduisent généralement par des longueurs utiles différentes d'un bras à l'autre et qui ne peuvent donc pas respecter les tolérances précitées.

On connaît d'autres types de blocs d'articulation, par exemple du type à rotule, qui ne présentent pas de caractéristique d'excentration entre l'axe d'articulation et l'axe de bloc mais qui ne possèdent pas non plus de caractéristiques d'élasticité et ne permettent pas de filtrer les oscillations.

La présente invention vient améliorer la situation pour les bras munis d'au moins un bloc d'articulation élastique.

Elle s'applique de façon générale à un bras destiné à être articulé à deux éléments distincts, notamment d'un véhicule automobile, par au moins deux articulations dont l'une au moins est donc élastique.

La présente invention peut d'abord s'exprimer sous la forme d'un procédé de fabrication d'un bras, comprenant les étapes suivantes :
a) préparer au moins deux blocs d'articulation, comportant chacun un axe général de bloc et un axe général d'articulation et dont l'un au moins est un bloc d'articulation élastique comprenant un lien élastique entre une bague interne dont l'axe définit sensiblement l'axe d'articulation et une bague externe dont l'axe définit sensiblement l'axe de bloc, ainsi qu'un corps de bras, avec au moins deux ouvertures destinées à loger chacune un bloc d'articulation, et
b) monter un bras prêt à être articulé, avec les deux blocs d'articulation logés de façon serrée dans lesdites ouvertures.

Selon une première caractéristique importante de l'invention, l'étape a) comprend en outre une opération consistant à fixer conjointement la position angulaire du ou des blocs d'articulation élastique et la distance entre les deux axes de blocs, en ajustant l'une de ces grandeurs par rapport à l'autre en fonction d'une distance désirée entre les deux axes d'articulation et en tenant compte d'une excentration résiduelle entre la bague interne et la bague externe du ou des blocs d'articulation élastique.

Selon une seconde caractéristique importante de l'invention, à l'étape b), le ou les blocs d'articulation élastique sont logés de façon serrée dans une position angulaire tenant compte de la grandeur ajustée.

Ainsi, le procédé de l'invention permet de respecter des tolérances limitées sur ladite distance désirée, avec les blocs d'articulation montés dans leur logement, en compensant l'effet d'une excentration résiduelle entre les bagues interne et externe du ou des blocs d'articulation élastique.

Le bras ainsi fabriqué peut donc comprendre deux blocs d'articulation élastique, ou encore un bloc d'articulation élastique et un bloc de type différent, tel qu'un bloc d'articulation de type rotule.

Préférentiellement, l'étape a) comprend une mesure de la position et de la valeur de l'excentration résiduelle des bagues du ou des blocs d'articulation élastique.

Dans une réalisation où les deux blocs sont des blocs d'articulation élastique, l'étape a) comprend préférentiellement l'opération consistant à fixer à la fois :
- la distance entre les axes des bagues externes respectives des deux blocs,
- la position angulaire de l'un des deux blocs, et
- la position angulaire de l'autre bloc,
en ajustant l'une au moins de ces grandeurs par rapport aux autres, en fonction de la distance désirée entre les axes des bagues internes respectives des deux blocs et en tenant compte des excentrations résiduelles entre les bagues interne et externe de l'un et l'autre des blocs.

A l'étape b), les blocs d'articulation sont alors logés dans les ouvertures dans des positions angulaires tenant compte de la grandeur ajustée.

Le procédé, au sens de la présente invention, peut se décliner selon au moins trois modes de réalisation principaux.

Dans un premier mode de réalisation, l'étape a) comprend les opérations suivantes :
a1) positionner les blocs d'articulation sur un montage définissant une distance désirée entre les deux axes d'articulation,
a2) mesurer la distance entre les deux axes de blocs, et
a3) aménager les deux ouvertures dans le corps de bras, en prévoyant une distance entre les ouvertures qui correspond à la distance mesurée pendant l'opération a2),
le procédé se poursuivant par le logement des blocs dans les ouvertures, sans modification de la position angulaire du bloc d'articulation élastique.

Ce premier mode de réalisation est aussi bien adapté à la fabrication d'un bras muni d'un bloc d'articulation rotule et d'un bloc d'articulation élastique qu'à la fabrication d'un bras muni de deux blocs d'articulation élastique.

De plus, dans une réalisation où les deux blocs sont des blocs d'articulation élastique, le lien élastique de chaque bloc peut posséder des propriétés élastiques circonférenciellement non isotropes.

Dans un second mode de réalisation, l'étape a) comprend les opérations suivantes :
a1) aménager les ouvertures dans le corps de bras, avec une entr'axe entre les ouvertures qui correspond à ladite distance désirée,
a2) fixer la position angulaire de l'un des deux blocs en vue de le loger dans l'une des ouvertures dans cette position angulaire, en réservant le ou l'autre bloc d'articulation élastique à l'opération suivante, et
a3) ajuster la position angulaire de ce bloc d'articulation élastique de sorte que la distance entre les deux axes d'articulation corresponde à la distance désirée,
le procédé se poursuivant par le logement du bloc d'articulation élastique dans l'autre ouverture, sans modification de sa position angulaire.

Le premier bloc dont la position angulaire est fixée à l'opération a2) peut être directement introduit dans son logement dès l'opération a2), ou encore être introduit ultérieurement, sans modification de sa position angulaire.

Dans ce second mode de réalisation, la mesure précitée de la position et de la valeur de l'excentration s'effectue sur le second bloc à loger, préalablement à l'opération a3).

Comme le mode réalisation précédent, ce second mode de réalisation est aussi bien adapté à la fabrication d'un bras muni d'un bloc d'articulation rotule et d'un bloc d'articulation élastique qu'à la fabrication d'un bras muni de deux blocs d'articulation élastique.

De plus, dans une réalisation où les deux blocs sont des blocs d'articulation élastique, le lien élastique du premier bloc logé pendant l'opération a2) peut posséder des propriétés élastiques circonférenciellement non isotropes.

Dans une réalisation où les deux blocs ont chacun un lien de propriétés élastiques circonférenciellement isotropes, l'opération a2) est préférentiellement précédée d'une mesure comparative des valeurs d'excentrations résiduelles des deux blocs, le premier bloc logé étant celui de plus faible excentration.

Dans un troisième mode de réalisation, les deux blocs sont des blocs d'articulation élastique et l'étape a) comprend un ajustement des positions angulaires des deux blocs en orientant leur excentration sensiblement perpendiculairement à la grande dimension du corps de bras.

Préférentiellement, les excentrations sont orientées sensiblement dans un même sens d'une direction perpendiculaire à la grande dimension du corps de bras.

Sur un bras à deux blocs d'articulation élastique, la distance entre les bagues internes des blocs dans leur logement, après l'étape b) du procédé selon l'invention, respecte avantageusement des tolérances meilleures que deux dixièmes de millimètre et préférentiellement meilleures que le dixième de millimètres.

Plus généralement, la présente invention vise aussi un bras destiné à être articulé à deux éléments distincts, notamment d'un véhicule automobile, ce bras comprenant deux ouvertures et deux blocs d'articulation comportant chacun un axe général de bloc et un axe général d'articulation. Les deux blocs sont logés de façon serrée dans les ouvertures et l'un au moins est un bloc d'articulation élastique comportant un lien élastique reliant une bague interne d'axe définissant sensiblement l'axe d'articulation et une bague externe d'axe définissant sensiblement l'axe de bloc.

Selon une première définition du bras selon l'invention, la position angulaire du (des) bloc(s) d'articulation élastique dans son (leur) ouverture est choisie en fonction de l'entr'axe des ouvertures pour respecter une distance désirée entre les axes d'articulation des blocs.

Selon une autre définition du bras selon l'invention, l'entr'axe des ouvertures est choisie en fonction de la position angulaire du (des) bloc(s) d'articulation élastique dans son (leur) ouverture pour respecter une distance désirée entre les axes d'articulation des blocs.

Dans un bras muni d'au moins une articulation élastique et au sens de la présente invention, l'effet d'une excentration résiduelle entre les bagues interne et externe du (des) bloc(s) d'articulation élastique est ainsi compensé.

La présente invention s'applique de façon avantageuse mais non limitative à un bras pour demi-essieu de véhicule automobile.

Dans des demi-essieux multi-liens connus, comprenant quatre bras ou plus, les excentrations résiduelles dans les blocs des différents bras ne permettent pas d'obtenir un angle précis du moyeu du demi-essieu par rapport à la caisse. De cet angle va notamment dépendre l'angle de pince d'une roue qui sera montée sur ce moyeu.

Des demi-essieux multi-liens fabriqués en grande série comportent habituellement un organe de réglage, par exemple disposé sur une bielle de pince, qui permet, après montage du demi-essieu, d'ajuster l'angle du moyeu dans des limites de tolérances acceptables en modifiant la longueur utile de cette bielle.

La bielle de pince doit donc comporter un organe de réglage (tel qu'un système de tige filetée avec écrou, ou encore un excentrique relié à la caisse) et une opération de réglage de la bielle de pince doit être effectuée en final pour ajuster l'angle du moyeu.

L'utilisation d'au moins un bras articulé selon l'invention dans un demi-essieu multi-liens permet de surmonter tout ou partie de ces inconvénients coûteux, voir de supprimer dans certains cas la bielle de pince.

A ce titre, la présente invention vise aussi un demi-essieu pour véhicule automobile, ce demi-essieu comprenant une pluralité de bras et des articulations reliant les bras, d'un côté, à un moyeu porte-roue et, d'un autre côté, à la caisse du véhicule, suivant un aménagement propre à définir un angle du moyeu par rapport à la caisse.

Selon une caractéristique importante, le demi-essieu comporte au moins un bras articulé selon l'invention, et l'aménagement précité est réalisé par un ajustement de la position et/ou de l'orientation angulaire de chaque bloc d'articulation élastique dans son logement, en vue de définir l'angle du moyeu par rapport à la caisse suivant des tolérances limitées.

Ainsi, le demi-essieu peut fonctionner sans organe de réglage de l'angle du moyeu par rapport à la caisse.

Dans une réalisation avantageuse, cet angle correspond à l'angle de pince d'une roue destinée à être montée sur le moyeu.

D'autres caractéristiques et avantages de l'invention apparaîtront à l'examen de la description détaillée ci-après, et des dessins annexés sur lesquels :
- la figure 1 représente un essieu arrière d'un véhicule automobile, dit "multi-liens", comprenant une pluralité de bras articulés ;
- la figure 2 représente schématiquement un autre demi-essieu multi-liens, dit "à bras superposés", comprenant une bielle de pince ;
- la figure 3 représente une ébauche de bras munie d'ouvertures destinées à loger des blocs d'articulation ;
- la figure 4 représente un bloc d'articulation élastique, avec une bague interne et une bague externe qui présentent, l'une par rapport à l'autre, une excentration résiduelle e ;
- la figure 5 représente schématiquement un bras articulé, prêt à être monté dans un demi-essieu multi-liens du type représenté sur la figure 2 ;
- la figure 6 représente schématiquement différents postes d'une installation pour la mise en oeuvre d'un procédé de fabrication d'un bras articulé 1 au sens de la présente invention ;
- les figures 7A et 7B représentent schématiquement deux étapes successives et un bras obtenu par un procédé selon un premier mode de réalisation de la présente invention ;
- la figure 8 représente une étape d'un procédé, selon un second mode de réalisation ;
- les figures 9A, 9B et 9C représentent des étapes successives d'un procédé, selon un troisième mode de réalisation ; et
- la figure 10 représente schématiquement un bloc d'articulation élastique comprenant un anneau en matériau élastomère, de propriétés élastiques non isotropes.

Les dessins contiennent, pour l'essentiel, des éléments de caractère certain. Ils pourront donc non seulement servir à mieux faire comprendre la description, mais aussi contribuer à la définition de l'invention, le cas échéant.

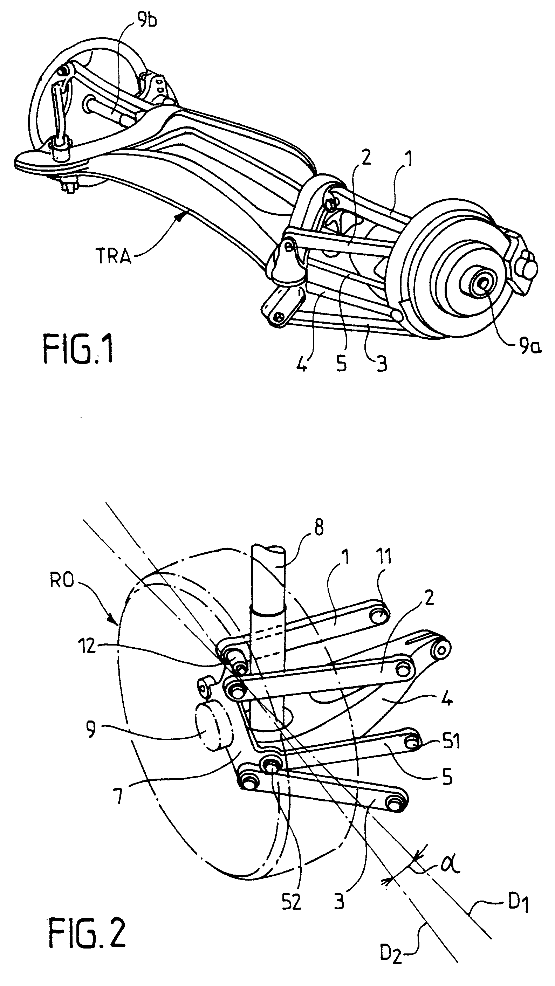

On se réfère tout d'abord à la figure 1 sur laquelle un essieu multi-liens comprend une pluralité de bras 1 à 4, articulés, d'une part, à la traverse TRA d'un véhicule automobile, aussi appelée berceau arrière, et, d'autre part, à un moyeu 9A, 9B destiné à porter une roue RO du véhicule.

En se référant à une représentation détaillée d'un demi-essieu (figure 2), ce demi-essieu multi-liens comporte un bras supérieur arrière 1, un bras supérieur avant 2, un bras inférieur arrière 4, et un bras inférieur avant 3. Ces bras comportent chacun un bloc d'articulation 11 relié directement ou par l'intermédiaire de la traverse TRA à la caisse du véhicule (non représentée), ainsi qu'un autre bloc d'articulation 12 relié à un pivot 7 portant le moyeu 9 de la roue RO. Le bras référencé 4 sur la figure 2, dit "bras inférieur arrière" comprend, dans l'exemple représenté, un appui pour un élément de suspension 8, tel qu'un amortisseur et/ou un ressort.

Bien entendu, les bras du demi-essieu peuvent être articulés, d'une part, au moyeu et, d'autre part, à la caisse ou au châssis du véhicule, éventuellement par l'intermédiaire d'un composant tel qu'un berceau, ou encore une traverse filtrée.

Le demi-essieu de la figure 2 comprend un cinquième bras 5 dit "bielle de pince" qui est aussi relié au pivot 7, d'une part, et à la caisse du véhicule (directement ou indirectement), d'autre part. La bielle 5 est destinée à définir un angle de pince de la roue tant au repos que lorsque la suspension est sollicitée. Cette bielle du demi-essieu de la technique antérieure se distingue des autres bras, par un moyen de réglage de la position de ses blocs d'articulation 51 et/ou 52, ce réglage s'effectuant après le montage de l'ensemble des bras dans le demi-essieu.

La direction D1 indique l'axe longitudinal du véhicule, tandis que la direction D2 indique la projection de la droite D1 sur le plan de roue du véhicule. L'angle α entre ces deux directions D1 et D2 représente l'angle de pince de la roue RO.

Les positions respectives des bras que comporte le demi-essieu définissent alors cet angle de pince.

Le comportement du véhicule est directement lié à l'angle que forme le moyeu avec la caisse du véhicule, et en particulier à l'angle de pince et ses variations. Un angle incorrect entraîne un sur-virage ou un sous-virage, qui s'accompagne par une instabilité du véhicule, une usure anormale du pneumatique, etc.

Dans le demi-essieu de la technique antérieure (figure 2), les organes de réglage de la bielle de pince 5 permettent alors d'ajuster l'angle de pince α à une valeur prescrite. L'écart entre l'angle de pince initial et l'angle de pince ajusté est principalement dû aux incertitudes sur les tolérances de fabrication des bras de la technique antérieure.

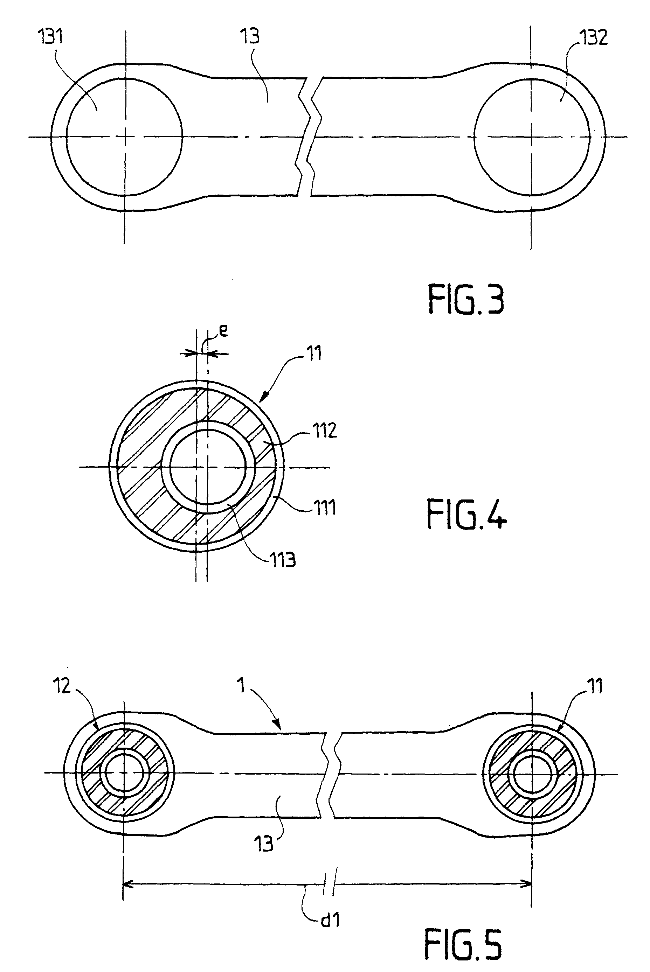

En se référant aux figures 3 à 5, un bras articulé comprend un corps de bras 13 muni de deux ouvertures 131 et 132 qui sont destinées à recevoir des blocs d'articulation, élastique dans l'exemple décrit.

Les ouvertures 131 et 132 peuvent être aménagées dans le corps de bras 13 par usinage, ou encore par formage. Le corps de l'un au moins des bras du demi-essieu peut être moulé, forgé, de forme tubulaire, ou encore réalisé dans un profilé d'aluminium extrudé, ou dans de la tôle emboutie.

En se référant à la figure 4, un bloc d'articulation élastique 11 comprend un anneau élastomère 112, de forme générale cylindrique creuse, fixé intérieurement à une cage interne 113 et extérieurement une cage externe 111. La cage externe 111 est préférentiellement réalisée sous la forme d'une bague métallique, solidaire de la surface externe de l'anneau en élastomère 112 et la cage interne 113 est préférentiellement réalisée sous la forme d'une bague interne métallique, solidaire de la surface interne de l'anneau en élastomère 112.

Deux blocs d'articulation du type représenté sur la figure 4 sont alors logés dans les ouvertures 131 et 132 du corps de bras 13 pour former le bras articulé 1, prêt à être monté dans un demi-essieu du type représenté sur l'une des figures 1 et 2.

Préférentiellement, ces blocs d'articulation élastique sont emmanchés à force, de manière connue en soi, dans les ouvertures 131 et 132, leurs bagues externes 111 étant logées de façon serrée dans ces ouvertures. Les ouvertures 131 et 132 sont, dans un exemple de réalisation, aménagées dans le corps de bras 13 par formage de collerettes pour l'emmanchement à force ultérieur des blocs d'articulation 11 et 12. Elles peuvent également être aménagées dans les ouvertures du corps de bras 13 en y rapportant des douilles cylindriques maintenues par exemple par soudure.

Les techniques de fabrication actuelles des anneaux en matériau élastomère 112 ne permettent pas d'obtenir un anneau parfaitement symétrique suivant toutes ses directions radiales. C'est ainsi que le bloc d'articulation, avec ses bagues interne et externe qui définissent respectivement un axe général d'articulation et un axe général de bloc, présente souvent une excentration résiduelle e entre ses bagues interne et externe.

Typiquement, la distribution statistique de l'excentration entre les bagues interne et externe d'un bloc d'articulation élastique suit une loi de Gauss, avec une valeur maximale d'excentration de l'ordre de 0,75 à 1 mm. Par ailleurs, la précision de la réalisation de l'entr'axe entre les ouvertures 131 et 132 du corps de bras 13 est de l'ordre de 0,1 mm. Ainsi, la variation susceptible de se produire sur la distance d1 (figure 5) entre les axes des bagues internes des blocs d'articulation, une fois montés dans leur logement, est de l'ordre de 1,5 à 2 mm pour les bras de l'état de la technique compte tenu de la présence de deux articulations élastiques. En effet, la variance sur la distribution de la distance désirée entre les axes des bagues internes des blocs est notamment égale à la somme des variances sur les excentrations de chacun des deux blocs et de la variance sur l'entr'axe des logements 131 et 132 (donc environ deux fois la variance sur l'excentration d'un bloc).

Cette dispersion sur la distance séparant les axes des bagues internes, et ce, sur une pluralité de bras d'un essieu multi-liens, ne permet pas d'assurer un angle de pince dans les tolérances prescrites pour les constructeurs. C'est ainsi que, dans les essieux de la technique antérieure (figure 2), la disposition du bras 5 (ou bielle de pince) par rapport aux autres bras 1 à 4 est réglable. Il faut donc prévoir un bras plus complexe et une opération de réglage de l'angle de pince après l'assemblage de l'essieu.

On comprend ainsi que la géométrie d'un demi-essieu multi-liens, et en particulier l'angle de pince d'une roue destinée à être montée sur un tel demi-essieu, dépend tout d'abord de la précision sur les distances entre bagues internes des différents blocs d'articulation élastiques qui sont montés dans les bras du demi-essieu.

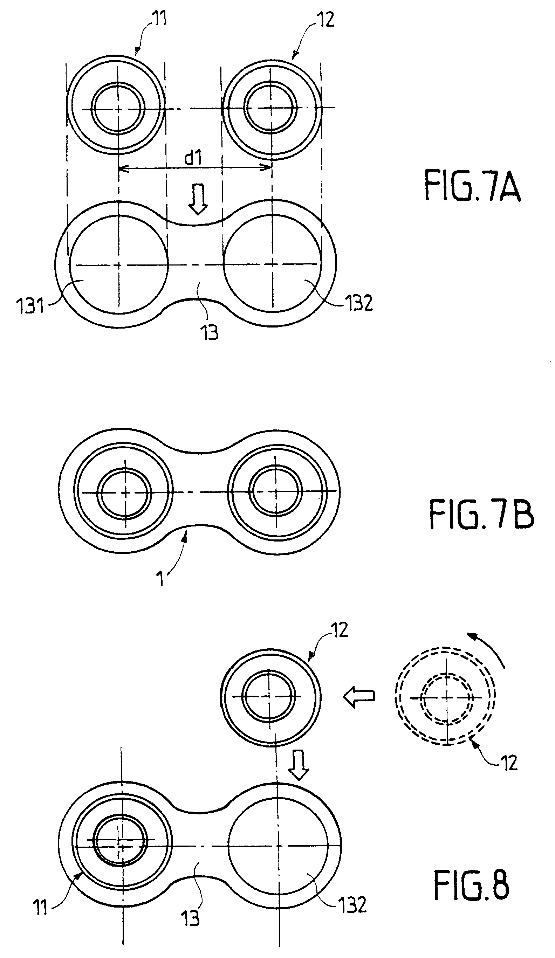

En se référant aux figures 7A et 7B, le procédé de fabrication d'un bras, selon un premier mode de réalisation de la présente invention, comprend une première étape consistant à disposer les deux blocs d'articulation élastique 11 et 12 dans un montage de mesure d'entr'axes. Les blocs d'articulation sont centrés sur leur bague interne, de sorte que la distance entre les axes des bagues internes respectives des deux blocs corresponde à la valeur désirée d1. Sans modifier les positions angulaires des blocs d'articulation 11 et 12, dans ce montage, on mesure la distance qui sépare les axes des bagues externes des blocs d'articulation 11 et 12.

Au préalable, on prévoit un corps de bras 13 comprenant au plus une ouverture 131. En fonction de la distance mesurée entre les axes bagues externes respectives des blocs d'articulation 11 et 12, on aménage la seconde ouverture 132 dans le corps de bras 13 de sorte que l'entr'axe des ouvertures 131 et 132 soit égal à la distance entre les axes des bagues externes des deux blocs 11 et 12 aux tolérances de fabrication près. Le procédé de fabrication se poursuit alors par un emmanchement en force des blocs 11 et 12, sans modification de leur position angulaire.

Dans une variante, on mesure d'abord la distance entre les bagues externes des blocs 11 et 12. Les deux ouvertures 131 et 132 sont ensuite usinées ou formées en fonction de l'entr'axe correspondant à cette mesure. Il peut aussi être prévu d'usiner ou former d'abord une ouverture, puis de mesurer la distance entre les bagues externes des blocs 11 et 12 et ensuite d'usiner ou former l'autre ouverture en appliquant comme entr'axe d'ouvertures la distance qui correspond à cette mesure.

Le bras obtenu comprend alors les deux blocs d'articulation logés de façon serrée dans les ouvertures 131 et 132, avec une distance d1 entre les axes des bagues internes des blocs 11 et 12, qui vaut la distance d1 désirée, à la tolérance d'usinage ou de formage près des ouvertures 131 et 132 dans le corps de bras 13. Typiquement, les précisions actuelles d'usinage ou de formage de deux ouvertures dans une ébauche de bras sont meilleures que 0,1 mm.

Dans ce premier mode de réalisation, la distance entre les axes des bagues internes des blocs est conforme à la distance d1 désirée. Néanmoins, l'entr'axe des ouvertures varie en fonction des excentrations résiduelles des bagues des deux blocs, la position des deux blocs étant choisie arbitrairement. La variance de la distance entre les axes des bagues internes est égale à la variance sur la tolérance de fabrication de l'entr'axe des ouvertures qui est beaucoup plus faible que celle sur l'excentration des blocs.

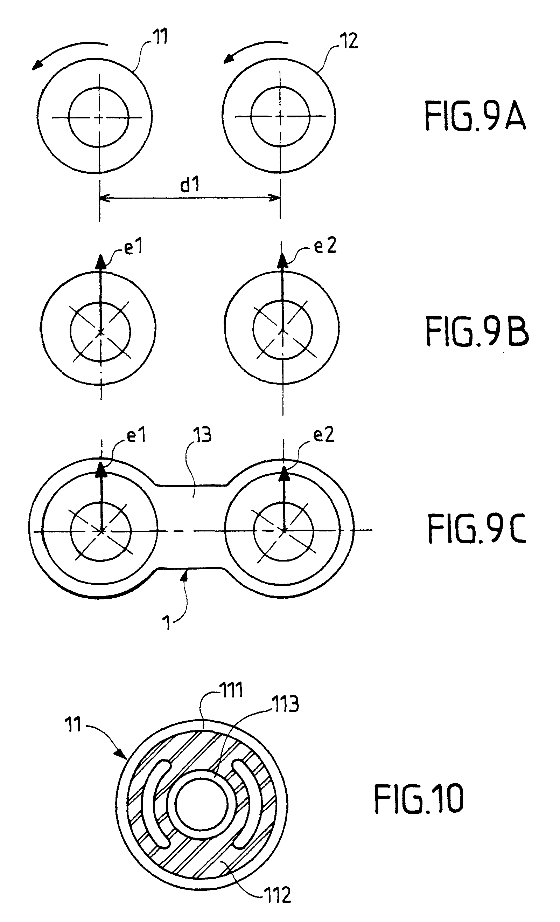

En se référant à la figure 8, le procédé de fabrication d'un bras selon un second mode de réalisation de la présente invention prévoit un aménagement préalable des ouvertures 131 et 132, à une distance d'entr'axe désirée égale à la distance d1 recherchée entre les axes des bagues internes. On fixe arbitrairement la position angulaire de l'un des blocs 11 en vue de son logement, dans cette position angulaire, dans l'une des ouvertures 131. Préférentiellement, ce bloc 11 est directement logé dans l'ouverture 131. En variante, une marque de référence indique la position angulaire fixée et le bloc 11 est introduit ultérieurement.

L'autre bloc d'articulation 12 subit une mesure de son excentration e, avant d'être monté dans l'autre logement 132, libre, du corps de bras 13.

Préférentiellement, le bloc d'articulation 11, déjà monté, et le bloc d'articulation 12, avant d'être monté, sont disposés tous deux dans un montage de mesure. Dans ce montage, on mesure l'excentration e du bloc d'articulation 12, ainsi qu'une distance entre l'axe de la bague interne du bloc logé 11 et le centre de l'ouverture libre 132. On calcule, en fonction de ces mesures, la position angulaire du second bloc à loger 12 pour respecter la distance désirée d1 entre les axes des bagues internes des blocs, tout en respectant une distance entre les axes de leur bague externe qui correspond à l'entr'axe des ouvertures 131 et 132.

En variante, le bloc d'articulation 11, déjà monté, et le bloc d'articulation 12, avant d'être monté, sont disposés tous deux dans un montage avec une distance d1 séparant les axes de leur bague interne. Le bloc d'articulation 12 subit ensuite une rotation autour de l'axe de sa bague interne, jusqu'à une position angulaire, choisie en fonction de son excentration e, dans laquelle les axes des bagues externes des blocs d'articulation 11 et 12 sont séparés de la distance d'entr'axe des ouvertures 131 et 132 du corps de bras 13.

Lorsque la position angulaire du bloc d'articulation 12 est ainsi ajustée, ce bloc 12 est emmanché à force dans l'ouverture restante 132, sans modification de sa position angulaire.

En variante ou en complément de ce second mode de réalisation, les deux blocs d'articulation 11 et 12 sont d'abord placés dans un montage de mesure d'excentration. Après comparaison des excentrations des blocs 11 et 12, le premier bloc logé dans l'une des ouvertures du corps de bras 13, est celui d'excentration la plus faible. Dans une telle réalisation, la variance sur la distance désirée d1 est avantageusement égale à la variance sur la tolérance d'usinage ou de formage de l'entr'axe.

Dans ce second mode de réalisation comme dans le mode de réalisation précédent, le bras obtenu comprend les deux blocs d'articulation logés de façon serrée, avec la distance désirée d1 entre les axes des bagues internes respectant des tolérances meilleures que 0,1 mm, puisque l'entr'axe des ouvertures reste conforme à la distance d1 désirée, aux tolérances d'usinage ou de formage près.

En se référant maintenant aux figures 9A à 9C, le procédé de fabrication d'un bras selon un troisième mode de réalisation de l'invention, prévoit tout d'abord les mesures respectives des excentrations e1 et e2 des blocs 11 et 12. Ces mesures sont suivies d'une orientation des deux blocs d'articulation 11 et 12, de sorte que leurs excentrations respectives e1 et e2 soient toutes deux parallèles à une même direction, sensiblement perpendiculaire à la grande dimension du corps de bras 13 (verticale dans l'exemple représenté sur la figure 9B). Préférentiellement, le sens des excentrations est le même entre les deux blocs d'articulation 11 et 12 (flèches e1 et e2).

Les deux blocs d'articulation 11 et 12 sont ensuite montés dans les ouvertures du corps de bras 12, préalablement aménagées avec une distance d'entr'axe d1, cette distance d1 définissant alors la distance entre les axes des bagues internes des blocs. La direction des excentrations résiduelles des bagues des deux blocs, montés dans leur logement, est conservée et reste sensiblement perpendiculaire à la grande dimension du bras (figure 9C).

Dans ce troisième mode de réalisation, l'entr'axe des ouvertures est conforme à la distance d1 désirée, aux tolérances d'usinage ou de formage près. De plus, la distance entre les axes des bagues internes des blocs est conforme à cette distance d1, aux tolérances de mesure et d'usinage ou de formage près, auxquelles devrait s'ajouter une tolérance due à une différence (1 mm au maximum) des excentrations résiduelles entre les deux blocs. Cependant, cette tolérance, pour une orientation perpendiculaire des excentrations, s'estime en effectuant le rapport entre cette différence maximale d'excentrations et l'entr'axe des ouvertures (environ 400 mm). Elle reste inférieure à 0,1 mm.

On entend par "sensiblement perpendiculaire" une direction des excentrations formant un angle compris entre 80° et 100° avec la grande dimension du corps de bras, ce qui permet de conserver une tolérance inférieure à 0,2 mm.

De façon générale, dans un bras fabriqué en grande série selon l'un quelconque des modes de réalisation décrits ci-avant, les positions angulaires des blocs d'articulation élastique dans leur logement et l'entr'axe des ouvertures formant logements sont mutuellement ajustés pour respecter une distance désirée entre les axes des bagues internes des deux blocs, de sorte que la variance sur la distance désirée d1 est statistiquement inférieure à la somme des variances sur les excentrations des blocs et sur la tolérance de réalisation de l'entr'axe.

La présente invention vise aussi une installation automatisée pour la fabrication en grande série de bras articulés selon l'un des trois modes de réalisation décrits ci-avant.

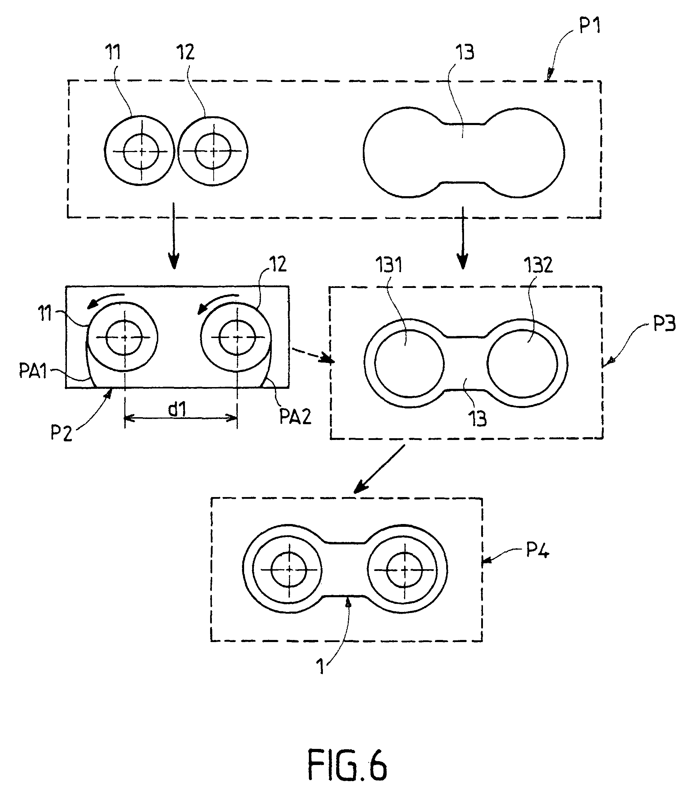

L'installation présentée à la figure 6 comprend un premier poste P1 vers lequel sont acheminés des blocs d'articulation élastique 11 et 12, ainsi qu'une ébauche de bras 13.

Le second poste P2 est un poste de mesure. Un robot manipulateur saisit les blocs d'articulation 11 et 12 par exemple par leur bague interne de manière à se centrer sur celle-ci.

Pour la mise en oeuvre des procédés selon les premier et second modes de réalisation ci-avant, le poste P2 est muni de moyens de mesure d'entr'axes. Il peut être aussi muni de moyens de mise en rotation d'un bloc (pour la mise en oeuvre du procédé selon le second mode de réalisation) ou des deux blocs (pour la mise en oeuvre du procédé selon le troisième mode de réalisation) et d'un ou deux palpeurs PA1, PA2 , en contact avec la surface externe de leur bague externe, pour mesurer la valeur d'une excentration résiduelle e1, e2 entre les bagues interne et externe des blocs d'articulation, ainsi que la position angulaire de cette excentration.

Ces mesures permettent de définir une orientation (ou position angulaire) des blocs d'articulation, de sorte que la distance qui sépare les axes de leur bague externe corresponde à l'entr'axe des ouvertures 131 et 132 du corps de bras 13, lesquelles sont aménagées au poste P3. Le cas échéant, les ouvertures 131 et 132 sont aménagées avec une entr'axe déterminée à partir des mesures réalisées au poste P2, ou encore, les positions angulaires relatives des blocs d'articulation 11 et 12 sont ajustées en fonction des excentrations mesurées et de l'entr'axe des ouvertures 131 et 132 préalablement aménagées dans le corps de bras 13, au poste P3. L'ordre qui régit ces deux étapes dépend bien entendu du mode de réalisation choisi parmi les trois modes de réalisation décrits ci-avant pour la fabrication automatisée des bras de demi-essieu, au sens de la présente invention.

Le poste P2 est préférentiellement relié à un contrôleur (non représenté), capable de piloter le poste d'usinage ou de formage P3. Ce contrôleur comprend notamment un processeur et une mémoire non volatile, auquel le processeur a accès. Avantageusement, cette mémoire comprend un module de calcul des positions angulaires des blocs et/ou de l'entr'axe des ouvertures à appliquer, en fonction de la distance d1 qui est désirée entre les axes des bagues internes des blocs, une fois logés. A ce titre, la présente invention vise aussi un tel module de calcul. Les moyens de mise en rotation du poste P2 permettent de positionner les blocs dans la position déterminée par le contrôleur.

Au poste P4 de l'installation, les blocs d'articulation 11 et 12, dont la position angulaire est, le cas échéant, ajustée, sont emmanchés en force dans les ouvertures 131 et 132 du corps de bras, sans modification de leur position angulaire. Pour cela, on utilise entre les postes P2 et P3 un robot de transfert des blocs 11 et 12 qui conserve les positions angulaires des blocs fixées au poste P2.

On obtient donc, au poste P4, un bras articulé 1, prêt à être monté pour former, avec les autres bras, le demi-essieu multi-liens au sens de la présente invention.

Dans une variante, un marqueur au poste P2 applique sur les surfaces externes des blocs 11 et 12 un signe (tel qu'une encoche) indiquant l'orientation de leur excentration, ou plus généralement la position angulaire qu'ils doivent occuper dans les logements de l'ébauche de bras pour respecter la distance désirée d1 entre les axes de leur bague interne, notamment pour la mise en oeuvre du procédé selon le second et le troisième mode de réalisation. Par exemple, ce signe peut indiquer un sens et une direction perpendiculaire à la grande dimension du corps de bras, pour indexer le montage ultérieur des blocs dans les ouvertures 131 et 132.

Le cas échéant, le poste d'usinage P3 et le poste d'emmanchement P4, d'une part, et le poste de mesure et d'orientation P2, d'autre part, peuvent être distants. Par exemple, il peut être prévu une installation avec des postes d'usinage ou formage d'ébauche de bras et d'introduction des blocs dans les ouvertures de corps de bras, tandis que les blocs d'articulation sont livrés au poste d'introduction avec un marquage qui permet d'indexer leur introduction dans leur logement.

Pour la mise en oeuvre du procédé selon le second mode de réalisation, le poste P1 peut directement comprendre des moyens d'emmanchement en force du premier bloc d'articulation 11 dans une ouverture du corps de bras.

Le bras fabriqué, en tenant compte de l'orientation de ses blocs d'articulation et de l'entr'axe des ouvertures du corps de bras, présente un écart entre la bague interne des blocs d'articulation qui respecte une distance désirée, avec une précision très satisfaisante (de l'ordre du dixième de millimètre). Le demi-essieu multi-liens, comprenant des bras fabriqués selon l'invention, respecte l'angle de pince α avec les tolérances prescrites. La bielle de pince pour le réglage de l'angle α peut être alors supprimée.

Bien entendu, la présente invention ne se limite pas à la forme de réalisation décrite ci-avant. Elle s'étend à d'autres variantes.

Ainsi, on comprendra que les blocs d'articulation élastique peuvent être réalisés à partir d'un anneau en matériau élastomère plein (comme décrit ci-avant), ou encore réalisés à partir d'un anneau élastomère comprenant des alvéoles (figure 10) et dont les propriétés élastiques sont, par conséquent, non isotropes. Un bras articulé dont les deux blocs d'articulation sont de propriétés élastiques non isotropes est préférentiellement fabriqué selon le premier mode de réalisation décrit, dès lors que la position angulaire des blocs d'articulation 11 et 12 n'est pas modifiée au cours du procédé selon ce premier mode de réalisation.

Un bras articulé comprenant un bloc d'articulation élastique seulement dont les propriétés d'élasticité sont non isotropes sera préférentiellement fabriqué selon le second mode de réalisation décrit ci-avant. Ce bloc d'articulation élastique non isotrope sera le premier logé dans l'ouverture de l'ébauche de bras 13 puisque sa position angulaire n'est pas modifiée au cours de ce procédé.

La présente invention s'applique aussi à un bras comprenant plus de deux blocs d'articulation, tel qu'un bras triangulé. Il peut être prévu un ajustement des positions angulaires des blocs reliés à la caisse et/ou un ajustement des deux entr'axes d'ouvertures de sorte que chaque distance entre l'axe de la bague interne des blocs reliés à la caisse et l'axe de la bague interne du bloc relié au moyeu est conforme à une distance désirée.

De plus et notamment pour un bras triangulé, la présente invention peut s'appliquer en outre à un bras dont l'une des articulations est élastique, tandis que l'autre articulation est de type rotule. Une articulation de type rotule définit un mouvement inscrit dans un cône. Dans ce mode de réalisation, on cherchera une précision maximale entre le sommet du cône et l'axe de la bague interne du bloc d'articulation élastique. La position angulaire du bloc d'articulation élastique et la distance entre le sommet du cône et l'axe de la bague externe du bloc d'articulation élastique sont ajustés mutuellement pour obtenir cette précision.

Bien entendu, la présente invention ne se limite pas à la fabrication d'un bras pour un demi-essieu pour véhicule automobile. Elle peut aussi bien s'appliquer à la fabrication d'un bras pour le support d'un autre équipement du véhicule, par exemple à un bras ou une biellette au moins pour le support ou le contrôle des mouvements du bloc moteur du véhicule.

## Revendications

1. Procédé de fabrication d'un bras destiné à être articulé à deux éléments distincts (7,TRA), notamment d'un véhicule automobile, du type comprenant les opérations suivantes :
a) préparer au moins deux blocs d'articulation (11,12), comportant chacun un axe général de bloc et un axe général d'articulation et dont l'un au moins est un bloc d'articulation élastique comprenant un lien élastique (112) entre une bague interne (113) dont l'axe définit sensiblement l'axe d'articulation et une bague externe (111) dont l'axe définit sensiblement l'axe de bloc, ainsi qu'un corps de bras (13), avec au moins deux ouvertures (131,132) destinées à loger chacune un bloc d'articulation, et
b) monter un bras prêt à être articulé, avec les deux blocs d'articulation logés de façon serrée dans lesdites ouvertures,
**caractérisé en ce que** l'étape a) comprend en outre une opération consistant à fixer conjointement la position angulaire du ou des blocs d'articulation élastique (11) et la distance entre les deux axes de blocs,
en ajustant l'une de ces grandeurs par rapport à l'autre, en fonction d'une distance désirée (d1) entre les deux axes d'articulation et en tenant compte d'une excentration résiduelle (e) entre la bague interne et la bague externe du ou des blocs d'articulation élastique,
et **en ce que**, à l'étape b), le ou les blocs d'articulation élastique sont logés de façon serrée dans une position angulaire tenant compte de la grandeur ajustée,
ce qui permet de respecter des tolérances limitées sur ladite distance désirée (d1), avec les blocs d'articulation montés dans leur logement, en compensant l'effet d'une excentration résiduelle (e) entre les bagues interne et externe du ou des blocs d'articulation élastique.

2. Procédé selon la revendication 1, **caractérisé en ce que** les deux blocs d'articulation sont tous deux des blocs d'articulation élastique (11,12),
**en ce que** l'étape a) comprend l'opération consistant à fixer à la fois :
- la distance entre les axes des bagues externes respectives des deux blocs,
- la position angulaire de l'un des deux blocs, et
- la position angulaire de l'autre bloc,
en ajustant l'une au moins de ces grandeurs par rapport aux autres, en fonction d'une distance désirée (d1) entre les axes des bagues internes respectives des deux blocs et en tenant compte des excentrations résiduelles (e1,e2) entre les bagues interne et externe de l'un et l'autre des blocs,
et **en ce que**, à l'étape b), les blocs d'articulation sont logés dans les ouvertures (131,132) dans des positions angulaires tenant compte de la grandeur ajustée.

3. Procédé selon la revendication 1 ou 2, **caractérisé en ce que**, après l'étape b), la distance (d1) entre les axes des bagues internes des blocs d'articulation élastique dans leur logement respecte des tolérances meilleures que deux dixièmes de millimètre et préférentiellement meilleures que le dixième de millimètre.

4. Procédé selon l'une des revendications 1 à 3, **caractérisé en ce que** l'étape a) comprend les opérations suivantes :
a1) positionner les blocs d'articulation sur un montage (P2) définissant une distance désirée (d1) entre les deux axes d'articulation,
a2) mesurer la distance entre les deux axes de blocs, et
a3) aménager les deux ouvertures (131,132) dans le corps de bras (13), en prévoyant une distance entre les ouvertures qui correspond à la distance mesurée pendant l'opération a2),
et **en ce que** le procédé se poursuit par le logement des blocs dans les ouvertures, sans modification de la position angulaire du bloc d'articulation élastique.

5. Procédé selon l'une des revendications 1 à 3, **caractérisé en ce que** l'étape a) comprend une mesure de la position et de la valeur de l'excentration résiduelle (e) des bagues du ou des blocs d'articulation élastique.

6. Procédé selon l'une des revendications 1 à 3, **caractérisé en ce que** l'étape a) comprend les opérations suivantes :
a1) aménager les ouvertures dans le corps de bras (13), avec une entr'axe entre les ouvertures qui correspond à ladite distance désirée (d1),
a2) fixer la position angulaire de l'un des deux blocs (11) en vue de le loger dans l'une des ouvertures (131) dans cette position angulaire, en réservant le ou l'autre bloc d'articulation élastique (12) à l'opération suivante, et
a3) ajuster la position angulaire de ce bloc d'articulation élastique (12) de sorte que la distance entre les deux axes d'articulation corresponde à la distance désirée (d1),
et **en ce que** le procédé se poursuit par le logement du bloc d'articulation élastique (12) dans l'autre ouverture (132), sans modification de sa position angulaire.

7. Procédé selon la revendication 2, prise en combinaison avec la revendication 6, **caractérisé en ce que** l'opération a2) est précédée d'une mesure comparative (P2) de la valeur des excentrations résiduelles (e1,e2) des deux blocs (11,12), et **en ce que** le premier bloc logé est le bloc de plus faible excentration.

8. Procédé selon l'une des revendications 1 à 3, prise en combinaison entre la revendication 5, **caractérisé en ce que** l'étape a) comprend en outre un ajustement de la position angulaire du ou des blocs d'articulation élastique en orientant son excentration (e1,e2) sensiblement perpendiculairement à la grande dimension du corps de bras (13).

9. Procédé selon la revendication 8, prise en combinaison avec la revendication 2 **caractérisé en ce que** l'excentration (e1,e2) est orientée sensiblement dans un même sens d'une direction perpendiculaire à la grande dimension de l'ébauche de bras.

10. Procédé selon l'une des revendications 1 à 4, **caractérisé en ce que** le lien du ou des blocs d'articulation élastique (112) possède des propriétés élastiques circonférenciellement non isotropes.

11. Procédé selon l'une des revendications 2 à 4, **caractérisé en ce que** le lien (112) de chaque bloc d'articulation élastique possède des propriétés élastiques circonférenciellement non isotropes.

12. Procédé selon la revendication 6, prise en combinaison avec la revendication 2, **caractérisé en ce que** le lien du premier bloc (11) logé pendant l'opération a2) possède des propriétés élastiques circonférenciellement non isotropes.

13. Bras destiné à être articulé à deux éléments distincts, notamment d'un véhicule automobile, du type comprenant deux ouvertures (131,132) et deux blocs d'articulation (11,12) comportant chacun un axe général de bloc et un axe général d'articulation, logés de façon serrée dans les ouvertures et dont l'un au moins est un bloc d'articulation élastique comportant un lien élastique (112) reliant une bague interne (113) d'axe définissant sensiblement l'axe d'articulation et une bague externe (111) d'axe définissant sensiblement l'axe de bloc,
**caractérisé en ce que** la position angulaire du/des bloc(s) d'articulation élastique (11) dans son/leur ouverture (131) est choisie en fonction de l'entr'axe des ouvertures (131, 132) pour respecter une distance désirée (d1) entre les axes d'articulation des blocs, ce qui permet de compenser l'effet d'une excentration résiduelle (e) entre les bagues interne et externe du/des bloc(s) d'articulation élastique.

14. Bras destiné à être articulé à deux éléments distincts, notamment d'un véhicule automobile, du type comprenant deux ouvertures (131,132) et deux blocs d'articulation (11,12) comportant chacun un axe général de bloc et un axe général d'articulation, logés de façon serrée dans les ouvertures et dont l'un au moins est un bloc d'articulation élastique comportant un lien élastique (112) reliant une bague interne (113) d'axe définissant sensiblement l'axe d'articulation et une bague externe (111) d'axe définissant sensiblement l'axe de bloc,
**caractérisé en ce que** l'entr'axe des ouvertures (131,132) est choisie en fonction de la position angulaire du/des bloc(s) d'articulation élastique (11) dans son/leur ouverture (131) pour respecter une distance désirée (d1) entre les axes d'articulation des blocs, ce qui permet de compenser l'effet d'une excentration résiduelle (e) entre les bagues interne et externe du/des bloc(s) d'articulation élastique.

15. Demi-essieu pour véhicule automobile, du type comprenant une pluralité de bras et des articulations reliant les bras, d'un côté, à un moyeu porte-roue (9) et, d'un autre côté, à la caisse du véhicule, suivant un aménagement propre à définir un angle du moyeu par rapport à la caisse,
**caractérisé en ce qu'**il comporte au moins un bras (1) selon l'une des revendications 13 et 14,
et **en ce que** l'aménagement est réalisé par un ajustement de la position et/ou de l'orientation angulaire de chaque bloc d'articulation élastique (11,12) dans son logement (131,132), en vue de définir l'angle du moyeu par rapport à la caisse suivant des tolérances limitées, ce qui permet au demi-essieu de fonctionner sans organe de réglage (51,52) de cet angle.

16. Demi-essieu selon la revendication 15, **caractérisé en ce que** l'angle du moyeu correspond à l'angle de pince (α) d'une roue (RO) destinée à être montée sur le moyeu (9).

## Patentansprüche

1. Verfahren zur Herstellung eines Arms, der dazu bestimmt ist, an zwei getrennten Elementen (7, TRA), insbesondere eines Kraftfahrzeuges, angelenkt zu sein, von dem Typ, der folgende Verfahrensschritte aufweist:
a) Vorbereiten von wenigstens zwei Gelenkblöcken (11, 12), die jeweils eine allgemeine Blockachse und eine allgemeine Gelenkachse aufweisen, und von denen wenigstens einer ein elastischer Gelenkblock ist, der eine elastische Verbindung (112) zwischen einem Innenring (113), dessen Achse im wesentlichen die Gelenkachse definiert, und einem Außenring (111) aufweist, dessen Achse im wesentlichen die Blockachse definiert, sowie einen Armkörper (13) mit wenigstens zwei Öffnungen (131, 132) aufweist, die dazu dienen, jeweils einen Gelenkblock aufzunehmen, und
b) Montieren eines Armes, der bereit ist, angelenkt zu werden, wobei die beiden Gelenkblöcke auf eingeklemmte Weise in den Öffnungen aufgenommen sind,
**dadurch gekennzeichnet, daß** der Schritt a) darüber hinaus einen Schritt aufweist, der darin besteht, die Winkelposition des oder der elastischen Gelenkblöcke (11 ) zusammen mit dem Abstand zwischen den beiden Blockachsen festzulegen,
unter Einstellen einer dieser Größen bezüglich der anderen, in Abhängigkeit eines gewünschten Abstands (d1) zwischen den beiden Gelenkachsen und unter Berücksichtigen einer verbleibenden Exzentrizität (e) zwischen dem Innenring und dem Außenring des oder der elastischen Gelenkblöcke,
und daß beim Schritt b) der oder die elastischen Gelenkblöcke auf eingeklemmte Weise in einer Winkelposition aufgenommen sind, die die eingestellte Größe berücksichtigt,
was ermöglicht, die begrenzten Toleranzen bei dem gewünschten Abstand (d1) mit den in ihren Aufnahmen montierten Gelenkblöcken zu berücksichtigen, unter Kompensieren des Effekts einer verbleibenden Exzentrizität (e) zwischen den Innen- und Außenringen des oder der elastischen Gelenkblökke.

2. Verfahren nach Anspruch 1, **dadurch gekennzeichnet, daß** die beiden Gelenkblöcke alle beide elastische Gelenkblöcke (11, 12) sind,
daß der Schritt a) den Schritt aufweist, der darin besteht, gleichzeitig festzulegen:
- den Abstand zwischen den entsprechenden Außenringen der beiden Blöcke,
- die Winkelposition des einen der beiden Blöcke, und
- die Winkelposition des anderen Blocks,
unter Einstellen von wenigstens einer dieser Größen bezüglich der anderen, in Abhängigkeit eines gewünschten Abstands (d1) zwischen den Achsen der entsprechenden Innenringe der beiden Blöcke und unter Berücksichtigen von verbleibenden Exzentrizitäten (e1, e2) zwischen den Innen- und Außenringen des einen und des anderen der Blöcke,
und daß beim Schritt b) die Gelenkblöcke in Öffnungen (131, 132) in Winkelpositionen aufgenommen sind, die die eingestellte Größe berücksichtigen.

3. Verfahren nach Anspruch 1 oder 2, **dadurch gekennzeichnet, daß** nach dem Schritt b) der Abstand (d1) zwischen den Achsen der Innenringe der elastischen Gelenkblöcke in ihren Aufnahmen Toleranzen besser als zwei zehntel Millimeter und bevorzugt besser als ein zehntel Millimeter einhält.

4. Verfahren nach einem der Ansprüche 1 bis 3, **dadurch gekennzeichnet, daß** der Schritt a) folgende Schritte aufweist:
a1 ) Positionieren der Gelenkblöcke auf einer Montageeinrichtung (P2), die einen gewünschten Abstand (d1) zwischen den beiden Gelenkachsen definiert,
a2) Messen des Abstands zwischen den beiden Achsen der Blöcke, und
a3) Anordnen der beiden Öffnungen (131, 132) in dem Körper des Arms (13), unter Vorsehen eines Abstandes zwischen den Öffnungen, die dem während des zweiten Schritts a2) gemessenen Abstand entspricht,
und daß das Verfahren durch das Einbringen der Blöcke in die Öffnungen, ohne Veränderung der Winkelposition des elastischen Gelenkblocks, fortgesetzt wird.

5. Verfahren nach einem der Ansprüche 1 bis 3, **dadurch gekennzeichnet, daß** der Schritt a) ein Messen der Position und des Wertes der verbleibenden Exzentrizität (e) der Ringe des oder der elastischen Gelenkblöcke aufweist.

6. Verfahren nach einem der Ansprüche 1 bis 3, **dadurch gekennzeichnet, daß** der Schritt a) die folgenden Schritte aufweist:
a1) Anbringen der Öffnungen in den Körper des Arms (13), mit einer Zwischenachse zwischen den Öffnungen, die dem gewünschten Abstand d1) entspricht,
a2) Fixieren der Winkelposition des einen der beiden Blöcke (11) um ihn in eine der Öffnungen (131) in dieser Winkelposition einzusetzen, unter Vorbehalten dieses oder des anderen elastischen Gelenkblockes (12) dem nachfolgenden Schritt, und
a3) Einstellen der Winkelposition dieses elastischen Gelenkblocks (12) derart, daß der Abstand zwischen den Gelenkachsen dem gewünschten Abstand (d1) entspricht,
und daß das Verfahren fortgesetzt wird durch das Einsetzen des elastischen Gelenkblocks (12) in die andere Öffnung (132) ohne Veränderung seiner Winkelposition.

7. Verfahren nach Anspruch 2, in Kombination mit Anspruch 6, **dadurch gekennzeichnet, daß** dem Schritt a2) eine Vergleichsmessung (P2) des Wertes der verbleibenden Exzentrizitäten (e1, e2) der beiden Blöcke (11, 12) vorhergeht, und daß der erste aufgenommene Block der Block mit der geringsten Exzentrizität ist.

8. Verfahren nach einem der Ansprüche 1 bis 3, in Kombination mit dem Anspruch 5, **dadurch gekennzeichnet, daß** der Schritt a) darüber hinaus ein Einstellen der Winkelposition des oder der elastischen Gelenkblöcke aufweist, unter Ausrichten seiner Exzentrizität (e1, e2) im wesentlichen senkrecht zur großen Abmessung des Körpers des Arms (13).

9. Verfahren nach Anspruch 8, in Kombination mit Anspruch 2, **dadurch gekennzeichnet, daß** die Exzentrizität (e1, e2) im wesentlichen in eine gleiche Richtung einer senkrechten Richtung zur großen Abmessung des Armrohlings ausgerichtet ist.

10. Verfahren nach einem der Ansprüche 1 bis 4, **dadurch gekennzeichnet, daß** die Verbindung des oder der elastischen Gelenkblöcke (112) nicht isotrope elastische Umfangseigenschaften aufweist.

11. Verfahren nach einem der Ansprüche 2 bis 4, **dadurch gekennzeichnet, daß** die Verbindung (112) eines jeden elastischen Gelenkblocks nicht isotrope elastische Umfangseigenschaften aufweist.

12. Verfahren nach Anspruch 6, in Kombination mit Anspruch 2, **dadurch gekennzeichnet, daß** die Verbindung des ersten Blocks (11), die während des Schritts a2) aufgenommen wird, nicht isotrope elastische Umfangseigenschaften aufweist.

13. Arm der dazu dient, an zwei beabstandete Elemente angelenkt zu werden, insbesondere eines Kraftfahrzeugs, von dem Typ mit zwei Öffnungen (131, 132) und zwei Gelenkblöcken (11, 12), die jeweils eine allgemeine Blockachse und eine allgemeine Gelenkachse aufweisen, wobei sie auf eingeklemmte Weise in den Öffnungen aufgenommen sind und von denen wenigstens einer ein elastischer Gelenkblock ist, mit einer elastischen Verbindung (112), die einen Innenring (113) mit einer Achse, die im wesentlichen die Gelenkachse definiert, mit einem Außenring (111) mit einer Achse, die im wesentlichen die Achse des Blocks definiert, verbindet,
**dadurch gekennzeichnet, daß** die Winkelposition des/der elastischen Gelenkblocks(blöcke) (11) in seiner/ihrer Öffnung (131) in Abhängigkeit der Zwischenachse der Öffnungen (131, 132) gewählt wird, um einen gewünschten Abstand (d1) zwischen den Gelenkachsen des Blocks einzuhalten, was ermöglicht, den Effekt einer verbleibenden Exzentrizität (e) zwischen den Innen- und Außenringen des/der elastischen Gelenkblocks/-blöcke zu kompensieren.

14. Arm, der dazu dient, an zwei getrennten Elementen, insbesondere eines Kraftfahrzeugs, angelenkt zu werden, vom Typ mit zwei Öffnungen (131, 132) und zwei Gelenkblöcken (11, 12), die jeweils eine allgemeine Blockachse und eine allgemeine Gelenkachse aufweisen, wobei sie auf eingeklemmte Weise in den Öffnungen aufgenommen sind, und von denen wenigstens einer ein elastischer Gelenkblock ist, mit einer elastischen Verbindung (112), die einen Innenring (113) mit einer Achse, die im wesentlichen die Gelenkachse bildet, und einen Außenring (111), mit einer Achse, die im wesentlichen die Blockachse definiert, verbindet,
**dadurch gekennzeichnet, daß** die Zwischenachse der Öffnungen (131, 132) in Abhängigkeit von der Winkelposition des der elastischen Gelenkblöcke (11) in seiner/ihrer Öffnung (131) gewählt wird, um einen gewünschten Abstand (d1) zwischen den Gelenkachsen der Blöcke zu behalten, was ermöglicht, den Effekt einer verbleibenden Exzentrizität (e) zwischen den Innenund Außenringen des/der elastischen Gelenkblocks/-blöcke zu kompensieren.

15. Halbachse für Kraftfahrzeug, vom Typ mit einer Mehrzahl von Armen und Gelenken, die die Arme verbinden, einerseits mit einer Radtragnarbe (9) und, andererseits dem Gehäuse des Fahrzeugs, gemäß einer Ausgestaltung, die in der Lage ist, einen Nabenwinkel bezüglich des Gehäuses zu definieren,
**dadurch gekennzeichnet, daß** sie wenigstens einen Arm (1) nach einem der Ansprüche 13 oder 14 aufweist,
und daß die Anbringung durch eine Einstellung der Position und/der Winkelausrichtung eines jeden elastischen Gelenkblocks (11, 12) in seiner Aufnahme (131, 132) verwirklicht wird, um den Nabenwinkel bezüglich des Gehäuses gemäß den begrenzten Toleranzen zu definieren,
was der Halbachse ermöglicht, ohne Einstellorgane (51, 52) dieses Winkels zu funktionieren.

16. Halbachse nach Anspruch 15, **dadurch gekennzeichnet, daß** der Nabenwinkel dem Zangenwinkel (α) eines Rades (RO) entspricht, das dazu dient, auf der Nabe (9) montiert zu werden.

## Claims

1. Method for fabricating an arm intended to be articulated to two separate elements (7, TRA), particularly of a motor vehicle, of the type involving the following operations:
a) preparing at least two articulation mounts (11, 12), each comprising an overall mount axis and an overall articulation axis and at least one of which is an elastic articulation mount comprising an elastic connection (112) between an inner bushing (113), the axis of which more or less defines the articulation axis, and an outer bushing, (111) the axis of which more or less defines the axis of the mount, and an arm body (13) with at least two openings (131, 132) which are each intended to house an articulation mount, and
b) mounting an arm ready for articulation, with the two articulation mounts housed tightly in the said openings,
**characterized in that** step a) also involves an operation that consists in jointly fixing the angular position of the elastic articulation mount or mounts (11) and the distance between the two mount axes,
by adjusting one of these parameters with respect to the other, according to a desired distance (d1) between the two articulation axes and allowing for a residual eccentricity (e) between the inner bushing and the outer bushing of the elastic articulation mount or mounts,
and **in that**, in step b), the elastic articulation mount or mounts are housed tightly in an angular position that allows for the adjusted parameter,
all of which makes it possible to meet tight tolerances on the said desired distance (d1) with the articulation mounts mounted in their housing, while compensating for the effect of a residual eccentricity (e) between the inner and outer bushings of the elastic articulation mount or mounts.

2. Method according to Claim 1, **characterized in that** the two articulation mounts are both elastic articulation mounts (11, 12),
**in that** step a) involves the operation that consists in fixing simultaneously:
- the distance between the axes of the respective outer bushings of the two mounts,
- the angular position of one of the two mounts, and
- the angular position of the other mount,
by adjusting at least one of these parameters with respect to the other according to a desired distance (d1) between the axes of the respective inner bushings of the two mounts and allowing for the residual eccentricities (e1, e2) between the inner and outer bushings of each of the mounts,
and **in that**, in step b), the articulation mounts are housed in the openings (131, 132) in angular positions that allow for the adjusted parameter.

3. Method according to Claim 1 or 2, **characterized in that**, after step b), the distance (d1) between the axes of the inner bushings of the elastic articulation mounts in their housings meets tolerances tighter than two tenths of a millimetre and preferably tighter than one tenth of a millimetre.

4. Method according to one of Claims 1 to 3, **characterized in that** step a) involves the following operations:
a1) positioning the articulation mounts on a fixture (P2) defining a desired distance (d1) between the two articulation axes,
a2) measuring the distance between the two axes of the mounts, and
a3) forming the two openings (131, 132) in the arm body (13), providing a distance between the openings which corresponds to the distance measured during operation a2),
and **in that** the method is continued by housing the mounts in the openings without altering the angular position of the elastic articulation mount.

5. Method according to one of Claims 1 to 3, **characterized in that** step a) involves measuring the position and the magnitude of the residual eccentricity (e) of the bushings of the elastic articulation mount or mounts.

6. Method according to one of Claims 1 to 3, **characterized in that** step a) involves the following operations:
a1) forming the openings in the arm body (13) with a distance between the centres of the openings that corresponds to the said desired distance (d1),
a2) fixing the angular position of one of the two mounts (11) with a view to housing it in one of the openings (131) in this angular position, saving the or the other elastic articulation mount (12) for the next operation, and
a3) adjusting the angular position of this elastic articulation mount (12) such that the distance between the two articulation axes corresponds to the desired distance (d1),
and **in that** the method is continued by housing the elastic articulation mount (12) in the other opening (132) without altering its angular position.

7. Method according to Claim 2 taken in combination with Claim 6, **characterized in that** operation a2) is preceded by a comparative measurement (P2) of the magnitude of the residual eccentricities (e1, e2) of the two mounts (11, 12), and **in that** the first mount housed is the mount with the smallest eccentricity.

8. Method according to one of Claims 1 to 3 taken in combination with Claim 5, **characterized in that** step a) further involves adjusting the angular position of the elastic articulation mount or mounts by orientating its eccentricity (e1, e2) to lie more or less perpendicular to the long dimension of the arm body (13).

9. Method according to Claim 8 taken in combination with Claim 2, **characterized in that** the eccentricity (e1, e2) is orientated more or less in the same direction as a direction perpendicular to the long dimension of the rough form of the arm.

10. Method according to one of Claims 1 to 4, **characterized in that** the connection of the elastic articulation mount or mounts (112) has elastic properties that are circumferentially non-isotropic.

11. Method according to one of Claims 2 to 4, **characterized in that** the connection (112) of each elastic articulation mount has elastic properties that are circumferentially non-isotropic.

12. Method according to Claim 6 taken in combination with Claim 2, **characterized in that** the connection of the first mount (11) housed during operation a2) has elastic properties that are circumferentially non-isotropic.

13. Arm intended to be articulated to two separate elements, particularly of a motor vehicle, of the type comprising two openings (131, 132) and two articulation mounts (11, 12) each comprising an overall mount axis and an overall articulation axis, which are housed tightly in the openings and at least one of which is an elastic articulation mount comprising an elastic connection (112) connecting an inner bushing (113) of an axis more or less defining the articulation axis and an outer bushing (111) of an axis more or less defining the mount axis,
**characterized in that** the angular position of the elastic articulation mount(s) (11) in its/their opening (131) is chosen according to the distance between the centres of the openings (131, 132) so as to observe a desired distance (d1) between the articulation axes of the mounts, all of which makes it possible to compensate for the effect of a residual eccentricity (e) between the inner and outer bushings of the elastic articulation mount(s).

14. Arm intended to be articulated to two separate elements, particularly of a motor vehicle, of the type comprising two openings (131, 132) and two articulation mounts (11, 12) each comprising an overall mount axis and an overall articulation axis, which are housed tightly in the openings and at least one of which is an elastic articulation mount comprising an elastic connection (112) connecting an inner bushing (113) of an axis more or less defining the articulation axis and an outer bushing (111) of an axis more or less defining the mount axis,
**characterized in that** the distance between centres of the openings (131, 132) is chosen according to the angular position of the elastic articulation mount(s) (11) in its/their opening (131) so as to observe a desired distance (d1) between the articulation axes of the mounts, all of which makes it possible to compensate for the effect of a residual eccentricity (e) between the inner and outer bushings of the elastic articulation mount(s).

15. Motor vehicle stub axle of the type comprising a number of arms and articulations connecting the arms, on the one hand, to a wheel-carrying hub (9) and, on the other hand, to the chassis of the vehicle, in an arrangement able to define a hub angle with respect to the body,
**characterized in that** it comprises at least one arm (1) according to one of Claims 13 and 14,
and **in that** the arrangement is achieved by adjusting the position and/or the angular orientation of each elastic articulation mount (11, 12) in its housing (131, 132) in order to define the angle of the hub with respect to the chassis within tight tolerances,
all of which allows the stub axle to operate without a member (51, 52) for adjusting this angle.

16. Stub axle according to Claim 15, **characterized in that** the angle of the hub corresponds to the toe-in angle (α) of a wheel (RO) intended to be mounted on the hub (9).
